(19) Europäisches Patentamt
European Patent Office
Office européen des brevets

(11) **EP 3 839 920 A1**

(12) **DEMANDE DE BREVET EUROPEEN**

(43) Date de publication:
**23.06.2021 Bulletin 2021/25**

(51) Int Cl.:
**G09B 9/02** *(2006.01)* **G09B 9/05** *(2006.01)*
**G09B 9/12** *(2006.01)*

(21) Numéro de dépôt: **20212387.3**

(22) Date de dépôt: **08.12.2020**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME
KH MA MD TN**

(30) Priorité: **20.12.2019 FR 1915202**

(71) Demandeur: **RENAULT s.a.s.**
**92100 Boulogne-Billancourt (FR)**

(72) Inventeur: **FANG, Zhou**
**78390 BOIS D'ARCY (FR)**

(54) **PROCÉDÉ DE PRÉDICTION D'ACCÉLÉRATION LATÉRALE POUR SIMULATEUR DE CONDUITE**

(57) Procédé de prédiction d'accélération latérale (100) pour une restitution de mouvement d'un modèle dynamique de véhicule piloté par un conducteur qui se trouve dans un simulateur de conduite automobile (50) comprenant une plateforme de simulation (15) apte à se déplacer dans un espace de travail sensiblement plan et commandée suivant un parcours du véhicule dans un espace virtuel, lesdites commandes étant optimisées par un algorithme temps réel de la restitution de mouvement dont la référence des signaux de futures accélérations latérales est prédéterminée,
caractérisé en ce que la prédetermination (20) des signaux de référence comprend une étape de détermination d'une table de rayons (21) de courbure en des points d'une trajectoire de référence (22) du parcours dans l'espace virtuel du véhicule.

[Fig.3]

EP 3 839 920 A1

## Description

Domaine technique de l'invention

La présente invention concerne une plateforme de simulation de conduite de véhicule automobile.

La présente invention concerne plus particulièrement un procédé d'optimisation de la prédiction des accélérations latérales d'un simulateur de conduite automobile pour améliorer la commande et restituer le meilleur rendu de mouvement en temps réel.

La présente invention concerne une méthode de prédiction optimisée des accélérations latérales du véhicule pour une stratégie de commande prédictive dans un simulateur de conduite automobile.

Etat de la technique

Dans le domaine des simulations de conduite automobile, on peut disposer d'une plateforme de simulation apte à se déplacer dans un environnement ou espace de travail de dimensions réduites ou limitées.

Cet espace de travail est par exemple une salle fermée avec une surface plane et la plateforme mobile peut se déplacer selon au-moins les quatre directions de ladite salle. L'espace réduit ne permet de reproduire que des sensations de durée limitée ou d'ampleur limitée. Pour pallier cette contrainte de dimensions réduites, une anticipation des mouvements de la plateforme mobile à la fois linéaires et rotationnels est nécessaire pour assurer des niveaux d'accélération que peuvent ressentir les utilisateurs. Il est donc nécessaire de prendre en compte la position ainsi que les valeurs de vitesse et d'accélération de la plateforme dans la stratégie de MCA (Motion Cueing Algorithm ou algorithme de la restitution de perception de mouvement) avec les contraintes des performances des moyens d'animation de la plateforme.

Pour compenser les contraintes dimensionnelles de l'espace réduit de mobilité dans laquelle circule la plateforme, il est aussi connu d'associer des effets pesanteurs mouvements de rotation de l'inclinaison de cabine avec les déplacements plan de ladite plateforme. En effet, le cerveau humain est sensible à la variation de l'accélération, et des effets physiologiques peuvent être obtenus par l'utilisation d'artifices pour compenser les déplacements limités selon un plan de la plateforme. Certains artifices permettent notamment de restituer des effets de longue durée. Il est connu ainsi de procéder un cabrage de cabine avec par exemple une vitesse angulaire inférieure à un seuil de la perception humaine pour donner une impression d'accélération linéaire soutenue par l'effet pesanteur qui agit dans le système vestibulaire ainsi que celui des poids du corps sur le dossier du siège du conducteur.

Les simulateurs à haute performance sont spécifiés pour fonctionner avec un temps de cycle à 1ms et un temps de réponse dynamique de l'ordre de 20ms. Pour permettre au simulateur d'approcher les forces inertielles d'un véhicule, un algorithme de restitution de mouvement est implémenté. Actuellement, deux grands types d'algorithmes sont connus. Un premier algorithme de calculs rapides, mais les résultats sont très moyens. Le second type d'algorithme basé sur la technique MPC pour « Model Prédictive Control » en anglais ou modèle de contrôle prédictif ou commande prédictive, permet une optimisation poussée pour procurer un meilleur résultat notamment en ressenti par l'utilisateur, mais avec un temps de calculs dégradé de l'ordre de 10ms avec des signaux de prédiction constants. L'algorithme de type MPC est susceptible d'entraîner ainsi des retards non négligeables sur le fonctionnement du simulateur. Il est d'autant plus pénalisé si l'algorithme ne possède pas de bonne stratégie de prédiction pour les futurs signaux.

Actuellement, les algorithmes de commande prédictive conventionnelle du type MPC (model prédictive control) en temps réel sont développés avec une loi de prédiction soit constante : les futures accélérations prises en compte sont égales à l'accélération présente, soit constante avec des zéros à la fin, soit exactement le même signal qu'un roulage de référence établi précédemment. Ce dernier est uniquement valable pour les tests non actifs, par exemple véhicule AD de même environnement et de même trafic. La présente invention propose une méthode de prédiction optimisée des accélérations latérales en temps réel et en fonction de la position du véhicule virtuel, donc il permet de réaliser une simulation de conduite avec une meilleure commande pour la restitution de la perception des mouvements par un simulateur de conduite grâce à la prédiction optimisée des signaux adaptée à l'état du véhicule et au rayon de courbure de la route avec le déplacement du véhicule.

Pour éviter la perception de mouvements non souhaités dans un simulateur de conduite automobile notamment de pré-positionnement de la plateforme du simulateur, avec une prise en compte des accélérations latérales, il est nécessaire d'anticiper les actions de pré-positionnement du véhicule du simulateur et donc de faire des prédictions de conduite avec un horizon de 10 à 15s. Toutefois, un algorithme de pas constant à 1ms est incompatible avec un système du contrôle du temps réel. Par exemple, il faut 15000 évaluations pour chaque pas de temps de 1ms. Même avec un pas de temps de commande à 10ms, il faut 1500 évaluations pour chaque pas de temps. Il est alors nécessaire de disposer d'importants moyens de calculs performants.

Pour prendre en compte l'horizon nécessaire de la dizaine de seconde, un algorithme à pas variable peut être employé. Le nombre d'évaluations est notablement réduit et de l'ordre de la centaine (50-100 évaluations).

Il est aussi connu d'employer une méthode pour évaluer l'accélération dite centrifuge grâce à une indexation de la distance parcourue combinée avec une méthode de recherche de position locale en X et Y.

Toutefois la prise en compte des coordonnées spatiales selon un plan du véhicule entraine une complexité des calculs et notamment des équations à résoudre.

Les accélérations latérales sont générées principalement lors d'un braquage de direction d'un véhicule.

Dans un simulateur, le conducteur est logé dans une cabine fixée sur la plateforme mobile. Ledit conducteur est plongé dans un environnement virtuel : des images sont par exemple projetées devant lui représentant par exemple un parcours pour un véhicule virtuel dont il a les commandes. Le conducteur effectue alors un parcours dans l'environnement virtuel et il passe des commandes au véhicule. La plateforme et la cabine doivent offrir un ressenti de conduite conforme au parcours virtuel.

Il est connu d'associer à chaque point du parcours dans l'environnement virtuel une valeur de rayon de courbure. Pour la stratégie de commande prédictive, la masse d'informations est alors très importante et peut sensiblement affecter les performances de calculs de l'unité centrale et donc le contrôle des mouvements du simulateur.

La publication FR2677155-A1 propose un simulateur de véhicule automobile comprenant une plateforme mobile pouvant être animée de mouvements selon des axes sur un plan horizontal d'une salle et un axe vertical, chacun de ces mouvements étant le plus indépendant possible des autres, les débattements des mouvements sont de valeurs raisonnables tout en assurant à la plateforme pratiquement tous les mouvements que peut subir dans la réalité un véhicule automobile en déplacement, et ce, de la façon la plus réaliste possible. Les enseignements de cette publication portent sur la mécanique de la plateforme mais n'associe pas de modèle vestibulaire ce qui ne procure pas un réalisme suffisant à la simulation.

La publication EP2166526-A2 propose une utilisation d'un algorithme de contrôle-commande optimal. Ce type d'algorithme est rapide mais avec une performance moindre et gère très mal les contraintes du système. Ce type d'algorithme ne permet pas de faire la stratégie prédictive.

La publication EP2412496-A1 divulgue une utilisation de la technique MPC mais avec une loi de « washout » ou retour en position désirée pour ramener la plateforme de simulation à une position neutre ou spécifique désirée avec un seuil de mouvement en dessous de la perception humaine du type filtre adaptif de second ordre. Les lois proposées protègent le système de mouvement de mécanique (hexapode) pour ne pas dépasser la limite de sécurité. Mais la gestion de la contrainte d'espace de travail qui est effectuée par le filtre adaptif nécessitant de faire une optimisation des paramètres, n'est pas explicitée. D'autre part, le brevet a recours à un algorithme de QP solveur non divulgué ou à un QP solveur standard appliqué dans MPC pour « Model Prédictive Control » en anglais ou modèle de contrôle prédictif ou commande prédictive. Ce modèle permet une optimisation poussée pour procurer un meilleur résultat notamment en ressenti par l'utilisateur, mais avec un temps de calculs dégradé de l'ordre de 10ms avec des signaux de prédiction constants. L'algorithme de type MPC est susceptible d'entraîner ainsi des retards non négligeables sur le fonctionnement du simulateur. Il est d'autant plus pénalisé si l'algorithme ne possède pas de bonne stratégie de prédiction pour les futurs signaux.

Il est donc un besoin d'un procédé de prédiction des accélérations latérales pour une plateforme de simulation de conduite automobile munie d'un algorithme de prédiction capable d'anticiper sur un horizon de 10 à 15s, afin de réduire la perception de mouvements non souhaités de la cabine de simulation.

L'objet de l'invention est un procédé performant de prédiction d'accélération latérale pour une restitution de mouvement d'un modèle dynamique de véhicule d'un simulateur de conduite automobile comprenant une plateforme de simulation apte à se déplacer dans un espace de travail sensiblement plan et commandée suivant un parcours du véhicule dans un espace virtuel.

Présentation de l'invention

La présente invention concerne un procédé de prédiction d'accélération latérale pour une restitution de mouvement d'un modèle dynamique de véhicule piloté par un conducteur qui se trouve dans un simulateur de conduite automobile comprenant une plateforme de simulation apte à se déplacer dans un espace de travail sensiblement plan et commandée suivant un parcours du véhicule dans un espace virtuel, lesdites commandes étant optimisées par un algorithme temps réel de la restitution de mouvement dont la référence des signaux de futures accélérations latérales est prédéterminée,
caractérisé en ce que la prédetermination des signaux de référence comprend une étape de détermination d'une table de rayons de courbure en des points d'une trajectoire de référence de parcours dans l'espace virtuel du véhicule.

De manière avantageuse, le procédé de prédiction des accélérations latérales pour un parcours virtuel d'un véhicule conduit par un conducteur logé dans une cabine d'un simulateur de conduite comprend une étape de prédetermination d'une table de référence de rayons de courbure pour des points d'une trajectoire de référence du parcours dans l'espace virtuel du véhicule. Le procédé est basé sur une trajectoire de référence du parcours du véhicule dans l'espace virtuel. Les rayons de courbure en des points de la trajectoire de référence sont déterminés ce qui réduit la taille de la table de référence.

Selon d'autres caractéristiques de l'invention :

- l'étape de détermination comporte au moins un roulage de la plateforme suivant un parcours du véhicule dans l'espace virtuel.

De manière avantageuse, l'étape de détermination de la table de référence des rayons de courbure comprend au moins un roulage pour déterminer la trajectoire de référence. Des points sont alors choisis sur cette trajectoire de référence. Les points de référence sont alors enregistrés dans la table de référence. -la trajectoire comporte des points de référence indexés et espacés entre eux.

De manière avantageuse, les points de référence sont espacés l'un de l'autre par une distance représentant sensiblement un pas constant de distance. L'indexation des points permet de faciliter le calcul et d'avoir une séquence de parcours.

- Chaque point de référence comporte une valeur de rayon de courbure de la trajectoire de référence.

De manière avantageuse, on détermine un rayon de courbure rattaché à chaque point de référence et les valeurs de rayon de courbure sont enregistrées dans la table de référence.

- un parcours selon le procédé se réfère à la trajectoire de référence de parcours.

De manière avantageuse, chaque parcours selon le procédé se réfère à la trajectoire de référence ; la trajectoire du nouveau parcours est comparée à la trajectoire de référence.

- le procédé comporte une étape de recalage par rapport à la trajectoire de référence. De manière avantageuse, le procédé comprend une étape de recalage de la trajectoire de nouveau parcours sur la trajectoire de référence.

- l'étape de recalage détermine le point de référence de la trajectoire de référence le plus proche de la position du véhicule.

De manière avantageuse, chaque point de la trajectoire d'un nouveau parcours est associé à un point de la trajectoire de référence choisi le plus proche sur la trajectoire de référence.

- le point de référence le plus proche est situé dans une zone limitée par un seuil de distance autour de la position du véhicule à un instant donné.

De manière avantageuse, le point de référence est choisi dans une zone entourant le point de trajectoire du nouveau parcours dont le rayon est inférieur à un seuil de distance pour faciliter la détermination du point le plus proche et valider son unicité.

- les points de la trajectoire de référence qui suivent le point de référence le plus proche sont repris pour former un horizon temporel à partir de la position du véhicule.

De manière avantageuse, les points de la trajectoire de référence suivant le point le plus proche sont repris et notamment les rayons de courbure desdits points pour faire partie de l'horizon temporel depuis la position du véhicule dans le nouveau parcours pour l'algorithme de calcul.

- chaque point de référence comporte des paramètres de parcours selon la trajectoire de référence.

De manière avantageuse, chaque point de référence de la trajectoire de référence peut comporter des paramètres de parcours pour modifier les paramètres du véhicule ou de la stratégie de commandes.

Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :

[Fig. 1] est une vue schématique d'un dispositif de simulation de conduite automobile avec des commandes générées par un système temps réel avec modèle prédictif.

[Fig. 2] est une vue schématique d'un logigramme du procédé de restitution pour la construction de la table des rayons de courbure.

[Fig. 3] est une vue schématique d'un logigramme du procédé de restitution selon l'invention.

[Fig. 4] est une vue schématique d'un logigramme d'une étape de recalage du procédé de restitution selon l'invention.

Dans la description qui va suivre, des chiffres de référence identiques désignent des pièces identiques ou ayant des fonctions similaires.

De manière connue, les simulateurs de conduite automobile sont de deux types :

- un premier type de simulateur sans mouvement et

- un second type de simulateur avec une plateforme et une cabine mobiles, qui est l'objet de notre invention.

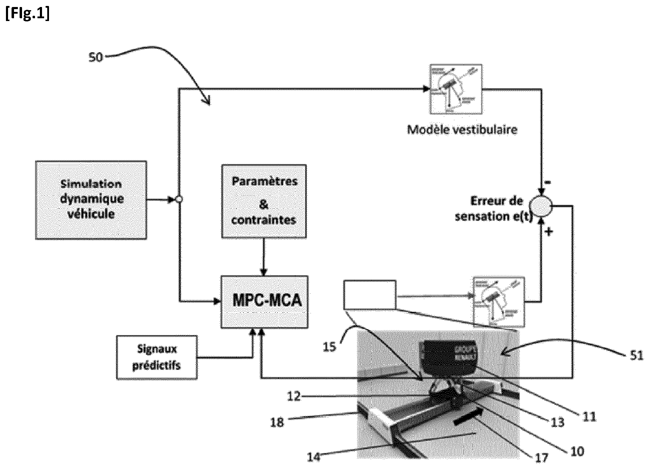

Comme représenté dans la figure 1, un simulateur ou dispositif de simulation 51 de conduite automobile peut comprendre une cabine 11 adaptée pour loger un conducteur et tenue par des bras ou actionneurs extensibles 13, chacun des bras étant fixé par une extrémité à une plateforme 10. Ladite plateforme est mobile dans un espace de travail 14 ici en coulissant sur des rails 18 selon la flèche 17.

Ledit espace de travail 14 présente une surface sensiblement plane. Il peut être formé par une salle avec des limites dimensionnelles. La cabine 11 communément appelé hexapode est tenue par les bras déformables ou actionneurs formés par des vérins 13. La plateforme mobile 10 ou base d'hexapode peut se déplacer par rapport à un plan horizontal sensiblement parallèle au plancher de l'espace de travail 14, pour produire des mouvements linéaires. Les bras extensibles sont aptes à produire des déplacements de la cabine par rapport audit plan horizontal. La plateforme mobile 10 avec la cabine ou hexapode 11 sont mobiles grâce à des moyens d'activation ou d'animation 16 qui sont commandés par une unité centrale (non représentée). Lesdits bras extensibles 13 ainsi qu'un moyen de déplacement 12 de la plateforme mobile 10 font partie des moyens d'animation 16 de la plateforme mobile 10 avec la cabine 11. Ladite unité centrale est apte à définir des commandes qui sont ensuite adressées auxdits moyens pour déplacer physiquement la plateforme mobile et la cabine.

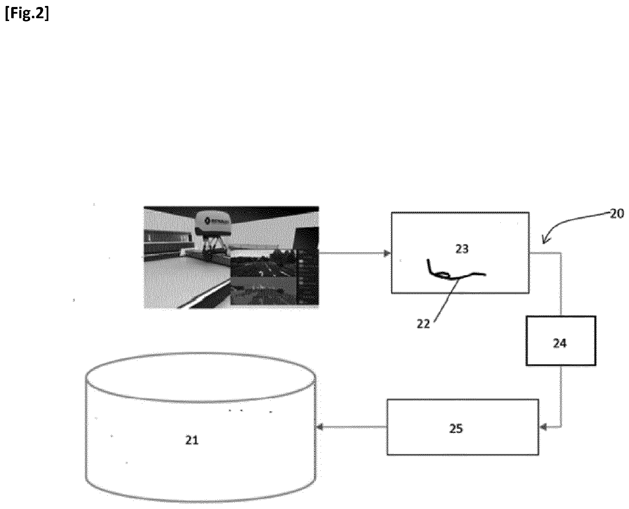

L'invention concerne l'environnement virtuel du conducteur formé par des images projetées et qui représentent un espace de conduite virtuel d'un véhicule tel que représenté en figure 2.

Le conducteur est placé dans un environnement virtuel et pilote un véhicule virtuel dans ledit espace de conduite virtuel. Les images sont projetées devant la vision du conducteur pour proposer un environnement de conduite virtuel. Dans ledit environnement, le conducteur pilote le véhicule selon un parcours prédéfini par exemple une route.

Le conducteur génère des commandes de conduite qui sont adressées à l'unité centrale tout au long du parcours.

L'unité centrale déroule un algorithme de commandes pour générer des commandes à passer aux moyens d'animation de la plateforme de simulation 15 suite aux commandes de conduite. Lesdites commandes pour les moyens d'animation sont générées par intervalle de temps comprise entre une et une dizaine de millisecondes.

Ledit algorithme comporte un programme de calculs qui est un programme temps réel apte à contrôler ou piloter les déplacements de ladite plateforme de simulation 15. Il est donc nécessaire que les résultats des calculs soient délivrés à une vitesse adaptée aux déplacements de ladite plateforme 15.

L'unité centrale commande également l'affichage des images devant le conducteur et recueille des commandes de conduite lancées par le conducteur en fonction par exemple du profil de la route à suivre. Le conducteur pilote le véhicule virtuel suivant un parcours comprenant des lignes droites et des virages. Les virages génèrent des accélérations latérales que l'unité de commande doit prendre en compte.

Les accélérations latérales sont fonction des rayons de courbure de la route à suivre. Elles sont aussi fonction du braquage de la direction du véhicule virtuel.

Il est connu d'établir une table à deux dimensions de rayons de courbure pour chacun des points du parcours dans l'espace virtuel pour prendre en compte les accélérations latérales. Toutefois, la table est volumineuse et impacte les performances de calculs de l'unité centrale et donc du simulateur.

Le fonctionnement d'un dispositif de simulation de conduite comprend une succession d'étapes:

- Une étape de prise en compte du parcours de simulation. Dans cette étape, le dispositif de simulation est apte à diffuser des images du parcours devant le conducteur. La diffusion peut par exemple être effectuée sur un écran devant le conducteur, ou devant le pare-brise du conducteur pour certaines informations ou dans une drome complète. Les images correspondent au parcours de la session de simulation avec la position du véhicule simulé dans le parcours. Elle reçoit donc en entrée la position du véhicule simulé dans le parcours.

- Une étape de prise en compte des commandes du conducteur ou d'un véhicule autonome. Cette étape évalue les commandes du conducteur en termes de direction, de boîte de vitesses et d'accélérations ou de freinage. Les signaux des commandes sont pris en compte pour adapter les déplacements du véhicule simulé. Ladite étape reçoit les ordres de commande du conducteur ou du véhicule autonome qui tient compte des informations de parcours issues de l'étape de prise en compte du parcours et de l'état du véhicule simulé ainsi que les trafics.

- Une étape de réponse ou réaction aux commandes selon un modèle de véhicule, consécutive à l'étape de prise en compte des commandes du conducteur. Cette étape permet en fonction du profil du parcours et de la position du véhicule dans le parcours, ainsi que des consignes de commandes du conducteur, de définir des valeurs d'accélérations ou de déplacement d'un modèle de véhicule représentant un véhicule réel.

Le terme véhicule désignera par la suite un véhicule virtuel dans le parcours dans l'espace virtuel.

Lesdites valeurs d'accélérations linéaires et rotationnelles sont susceptibles d'être ensuite soumises à des corrections de facteur d'échelle pour prendre en compte les contraintes de l'espace de travail 14 réduit ainsi que des performances des moyens d'animation 16 de la plateforme de simulation 15.

Les dispositifs de simulation de conduite 50 avec une plateforme mobile peuvent mettre en jeu la perception du conducteur pour compenser principalement des contraintes d'espace notamment des dimensions réduites de l'espace de travail 14. Ainsi afin d'améliorer les perceptions des utilisateurs de dispositif de simulation de conduite automobile 51, et notamment la durée des perceptions, on peut associer les déplacements plans de la plateforme de simulation 15 avec des mouvements de rotation de la cabine 11 dans laquelle est logé le conducteur.

L'unité centrale est donc apte à optimiser les commandes de mouvement de ladite plateforme de simulation 15 qui comprennent des commandes de déplacement de la plateforme mobile 10 et des commandes de rotation de la cabine 11 en prenant en compte un modèle vestibulaire représentant le ressenti du conducteur. Le seuil de vitesse de perception du système semi-circulaire est donc une contrainte pour l'optimisation des valeurs de commandes d'accélération de la plateforme.

L'unité centrale est aussi apte à la détermination et d'optimisation des valeurs d'accélérations pour commander les déplacements de la plateforme simulation 15. Pour ce faire, elle déroule un programme de calculs temps réel avec en entrée des contraintes de l'espace de travail réduit et des performances limitées des moyens d'animation ainsi que des contraintes propres à la perception de mouvement rotationnel du conducteur ou contraintes de mouvement en tilt.

Les contraintes sont déterminées dans une étape de détermination des contraintes prédictives.

Le programme ou algorithme de calculs en temps réel permet de calculer des accélérations pour restituer le mouvement de véhicule ou MCA pour Motion Cueing Algorithm en anglais. Ledit algorithme est basé sur un modèle de contrôle prédictif ou MPC pour Model Prédictive Control en anglais. Ledit algorithme permet de résoudre une optimisation notamment une minimisation d'une fonction de coûts en formule QP ou Quadratic Programming pour programmation quadratique à l'ordre 2 standard. Plusieurs solveurs ou logiciels de résolution existent qui permettent de trouver une ou plusieurs solutions optimisées avec la prise en compte des contraintes. Cependant, lesdits solveurs peuvent nécessiter un temps de calculs important de l'ordre de plusieurs millisecondes voire quelques dizaines de millisecondes, ledit temps de calculs entrainant alors une dégradation de la performance notamment de la réponse dynamique du dispositif de simulation. De plus, le calcul peut se terminer en échec notamment lorsque le pas de temps est trop restreint. La solution peut donc être non optimale ou non convergée. L'étape de détermination des commandes selon le modèle MPC-MCA est précédée par une étape préliminaire de transformation du modèle de programmation quadratique ou QP. Ladite étape de transformation permet la formulation des équations en modèle assimilable par les logiciels de résolution temps réel.

Pour améliorer la fiabilité des commandes avec les algorithmes temps réel, il est nécessaire de disposer d'un horizon temporel et donc de signaux prédictifs selon la figure 1.

On peut ainsi définir une fonction de coûts en ordre quadratique dont l'expression est :

[Math 1]

$$J_N^*(X_k) = \min_{u_0, u_1, \ldots u_{Nc-1}} \sum_{j=1}^{M} \sum_{k=1}^{N} \left\| c_j . \hat{x}_k - r_{k,j} \right\|_{qyi}^2 + f_{effort}(u_k, \hat{x}_k)$$

où l'indice k représente le moment du temps.

L'algorithme temps réel est alors apte à minimiser ladite fonction coûts et nécessite un horizon temporel de l'ordre de 10 à 15s qui assure la fiabilité des résultats.

J=1 est relatif à l'accélération latérale

J=2 est relatif à la vitesse de roulis.

J=3 est relatif à l'accélération longitudinale.

J= 4 est relatif à la vitesse de tangage.

J=5 est relatif à la vitesse de lacet.

rk, j représente les valeurs de référence correspondant généralement à une des variables de mouvement qui comprennent les accélérations, vitesses de rotation ou les forces spécifiques en entrée ou à la sortie du modèle vestibulaire, dues à la combinaison d'accélération et à la pesanteur par une inclinaison commandée de la cabine. L'indice k est pour indiquer les différents moments de temps dans l'horizon prédictif et j, les différentes perceptions des mouvements linéaires ou rotationnels dans différents axes, M représente le nombre de perceptions de mouvement pris en compte dans la fonction de coût (par ex. pour reproduire l'accélération linéaire du véhicule et la vitesse de rotation du véhicule M = 2).

Notons que la formule ci-dessus représente la fonction de coût pour la restitution de mouvement d'un seul axe, longitudinal ou latéral par ex. Lors de présence d'un mouvement du lacet avec une table de lacet par exemple, les perceptions de mouvements sont les résultants de l'axe x, et y. Dans ce cas, la fonction de coût doit s'adapter en conséquence et la matrice c peut avoir expression couplée de différents mouvements.

$\hat{x}_k$ représente l'état du système qui comprend les positions de la plateforme dans l'espace de travail, les accélérations et vitesse de ladite plateforme à l'instant actuel et dans le futur ainsi les variables du modèle vestibulaire.

La fonction de coûts comprend une partie concernant les variables de mouvement et une partie concernant les efforts à fournir.

La fonction de coûts dépend donc d'une part des valeurs de référence qui comprennent les accélérations latérales et d'autre part des couplages des variables.

- Les valeurs de référence ne peuvent être définies pour tous les points de l'espace de parcours pour ne pas alourdir la masse de données et ainsi affecter les performances des calculs de minimisation de la fonction de coûts.

Pour réduire les temps de calculs de minimisation de la fonction de coûts, l'invention propose :

- une estimation des valeurs de référence par rapport à une moyenne desdites valeurs relevées sur au moins un parcours de mesures.

L'invention propose un procédé 100 de prédiction d'accélération latérale qui nécessite la construction d'une table des rayons de courbure selon un parcours du véhicule virtuel dans un espace virtuel qui diffère d'une table de rayons de courbure géographique permet de réduire sensiblement la masse des données de référence à calculer en temps réel et d'optimiser les temps de calculs.

De façon claire, la plateforme de simulation se déplace dans un espace physique et elle chargée de procurer des simulations pour le conducteur. Des images sont projetées devant le conducteur de la plateforme pour représenter un espace virtuel dans lequel il évolue dirigeant un véhicule virtuel comme représenté en figure 2. Une table de rayons de courbure dite géographique peut être définie dans ledit espace virtuel, cette table serait alors extrêmement volumineuse et peut affecter les performances de calculs et donc du simulateur.

L'invention propose donc une table de rayons de courbure réduite qui est fonction de la trajectoire de parcours du véhicule dans l'espace virtuel. Le procédé de l'invention comprend une étape préliminaire 20 de construction de la table ou d'une base 21 contenant des rayons de courbure en différents successifs d'une trajectoire de référence 22 du parcours.

L'étape préliminaire comprend :

- la définition 23 de la trajectoire de référence 22.

Ladite trajectoire de référence 22 est obtenue par exemple après au-moins un roulage c'est-à-dire au-moins une première conduite. Toutefois il est évident que plusieurs roulages par différents conducteurs permettent de trouver une trajectoire moyenne suffisamment représentative et de minimiser également des événements aléatoires. La trajectoire moyenne devient la trajectoire de référence.

- un indexage de points de référence 24 de la trajectoire de référence. La trajectoire comprend un ensemble de points successifs, chacun desdits points peut être caractérisé par sa position en X et Y, la valeur de vitesse de roulage, la valeur d'accélération transversale dans l'espace virtuel. Les points sont indexés pour valider la séquence du parcours. On a ainsi un indexage absolu pour tout le parcours et un indexage relatif pour faciliter les calculs. L'indexage relatif comprend un ensemble de points à un instant donné formant un horizon temporel pour l'algorithme temps réel.

Pour l'indexage relatif, à un instant donné, en un point donné de l'espace virtuel, dans un repère relatif lié à la position du simulateur dans l'espace virtuel, le point d'origine de la trajectoire commence depuis un indice zéro ; la trajectoire est ensuite développée depuis le point 0 par pas de distance relativement faible de l'ordre par exemple de 0.1 m jusqu'à une distance maximale de roulage qui couvre l'ensemble de la trajectoire de la route.

- Un calcul des rayons de courbure 25 du parcours pour chaque point de référence.

Pour une trajectoire ayant un rayon de courbure R, on a la relation suivante entre la vitesse du lacet $\omega_h$ la vitesse du véhicule v et le rayon de courbure R :

[Math 2]

$$\omega_h = V/R$$

Avec plusieurs roulages j, on peut définir une trajectoire moyenne et le rayon de courbure pour chaque point i de la trajectoire moyenne. Pour chaque roulage j, on a :

[Math 3]

$$R_{i,j} = V_{i,j}/\omega_{h,i,j}$$

La valeur du rayon de courbure au point i peut alors être déterminée par différentes méthodes dont celle statistique des moindres carrés par exemple avec les relevés des différents roulages :

[Math 4]

$$R_i = \Sigma \frac{V_{i,j}}{\omega_{h\,i,j}}, \qquad si\ |\omega_{h\,i,j}| < 10^{-4}, R_i = sign(\omega_{h\,i,j}).\,10000$$

On définit ainsi une table de rayons de courbure selon différents points de la trajectoire de référence dans l'espace virtuel de roulage.
Ladite table ou base des rayons de courbure 21 est alors mise en mémoire de l'unité centrale.
A partir de ladite table, on peut alors obtenir des valeurs d'accélération latérale à chaque roulage du véhicule dans l'espace virtuel.
L'accélération latérale d'un véhicule comprend deux composants :

• la dérivée de la vitesse de dérive du véhicule due au mouvement de dérive latérale d'un véhicule, notée $dv_y/dt$

• l'effet de l'accélération centrifuge due au rayon de courbure de la route ou au changement de la trajectoire voulu par le conducteur, noté AccYc.

L'accélération latérale est donc de la forme :

[Math 5]

$$AccY = \text{AccYc} + \frac{\text{dv}_y}{\text{dt}}$$

La dérive de la vitesse latérale vy est un composant à haute fréquences. Son influence dans la stratégie de commande de pré-positionnement est faible du fait que l'action de pré-positionnement correspond plutôt à un mouvement lent. Nous avons alors :

[Math 6]

$$AccY \cong \text{AccYc} = \frac{\text{V}^2}{\text{R}}$$

Pour prédire la future d'accélération latérale, il faut donc disposer de la prédiction de la vitesse longitudinale.
A partir de la valeur d'accélération longitudinale courante, nous avons la vitesse du véhicule au pas de temps k dans l'horizon du temps futur de l'espace virtuel :

[Math 7]

$$[V(k)] \cong V(k-1) + [AccX(0)].dT_k \quad avec \ dT_k = T(k+1) - T(k)$$

Où l'indice k se réfère au pas de temps k, et k = 0 pour le moment courant et V(0) la vitesse courante du véhicule. $T_k$ est le temps d'horizon futur au pas k. le symbole [] est pour limiter la valeur de vitesse ou d'accélération et décélération à un certain seuil c'est-à-dire :
La vitesse du véhicule doit rester inférieure à un seuil de vitesse du véhicule simulé L'accélération du véhicule doit rester inférieure à un seuil d'accélération du véhicule simulé.
Lorsque l'on dispose de V(k), la distance parcourue au point M relative à la position présente est déterminée par :

[Math 8]

$$L(M) = \sum_{k=1}^{M} V(k).dT_k \quad avec \ dT_k = T(k) - T(k-1) \ et \ M = \{1,2,...N\}$$

Avec L(0) étant la distance parcourue de référence.
Il est nécessaire d'avoir le rayon de courbure dans un repère absolu. L'indice iM de la trajectoire au point M dans le repère absolu est donc :

[Math 9]

$$iM = i0 + entière(L(M)/ΔL)$$

En fonction de l'indice iode la distance parcoure courante et du pas de distance constant préalablement défini.
Le rayon de courbure R($i_M$) au point d'indice absolu $i_M$ et la valeur d'accélération AccY(M) estimée au point d'indice $i_M$ sont donc parfaitement déterminés :

[Math 10]

$$AccY(M) \cong \text{V(M)}^2/R(i_M)$$

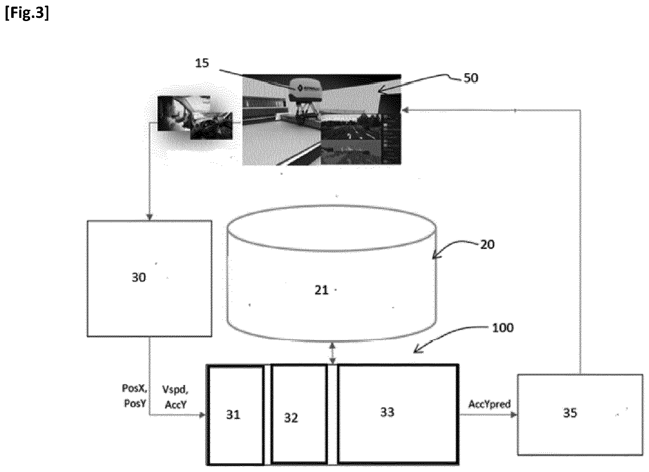

On obtient une table d'indexation à une dimension pour évaluer l'accélération latérale selon une trajectoire de référence ou moyenne issue des tests de roulage. Une table à deux dimensions avec les valeurs de position PosX, PosY selon les axes X et Y est volumineuse et entraine des calculs beaucoup plus longs.
Le simulateur se déplace dans l'espace virtuel et peut avoir une trajectoire différente ou distincte de la trajectoire moyenne de référence issue de la phase de roulage de tests.
Une fois, la table de référence formée, on peut effectuer des roulages normaux.
La trajectoire de chacun des roulages normaux peut varier de la trajectoire de référence.
Selon la figure 3, pour chaque roulage, on utilise un modèle dynamique de véhicule 30 se déplaçant dans l'espace virtuel et se trouvant à des valeurs de la position du véhicule PosX, PosY à un instant donné.

Le procédé 100 permet la prédiction de l'accélération latérale comprenant :

- une étape d'indexation du parcours 31,

- une étape de recalage à la trajectoire de référence 32 et

- une étape d'estimation de l'accélération latérale 33 avec les valeurs de rayons de courbure de la base 21.

Un parcours selon le procédé se réfère donc à la trajectoire de référence de parcours. Le procédé selon l'invention substitue la trajectoire de référence à chaque point du parcours du roulage dit normal.
L'étape d'indexation du parcours est analogue à l'étape d'indexation pour la table de référence.
L'invention propose donc l'étape de recalage 32 de la trajectoire du véhicule dans l'espace virtuel à la trajectoire de référence. Il est donc nécessaire de comparer la trajectoire du roulage actuel avec la trajectoire de référence et notamment de déterminer la position du véhicule par rapport à la trajectoire de référence.
Pour faciliter la compréhension, la description propose une évaluation de la distance entre la trajectoire du véhicule dans l'espace virtuel et la trajectoire de référence dans un espace plan à deux dimensions pour réduire les paramètres et les temps de calculs. La précision de calcul est suffisante pour l'algorithme de prédiction. Ladite distance est obtenue en déterminant la plus basse valeur de distances entre le véhicule simulé et la trajectoire de référence.
Il va de soi, que l'invention n'est pas réduite à un espace plan.

[Math 11]

$$\Delta L = min \sum_{j=i-P}^{i+P} [(VehPosX(i) - RefPosX(j))^2 + (VehPosY(i) - RefPosY(j))^2]$$

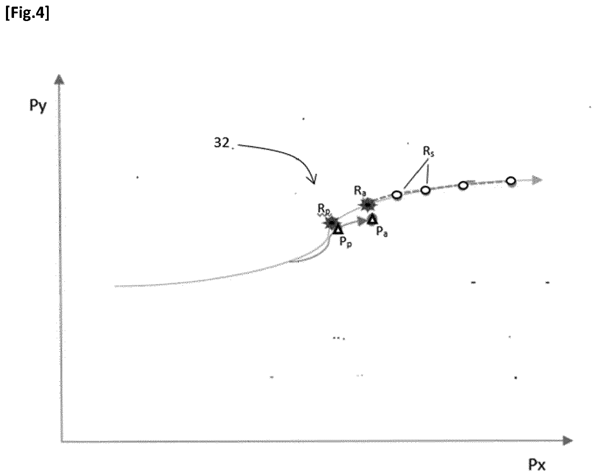

De manière préférentielle, le minimum de distance est évalué en fonction de la position du véhicule. Ladite position du véhicule est la position courante fournie par le modèle dynamique véhicule. Une zone dite de recalage dans l'espace virtuel autour de la position du véhicule peut alors être définie et limitée. On peut alors évaluer la distance minimale avec une portion de trajectoire de référence se trouvant dans ladite zone de recalage à un instant donné. Par exemple, pour une vitesse de véhicule maximale à 250km/h, la distance parcourue en 1 ms est inférieure à 7cm. En tenant compte de la dispersion des trajectoires, une zone de recalage avec un rayon inférieur à un seuil de distance de l'ordre de 4 fois la distance parcourue est suffisante pour permettre la détermination du point le plus proche de la trajectoire de référence moyenne.
Suite à l'étape de recalage, le procédé définit le point de la trajectoire de référence le plus proche de la position du véhicule comme représenté en figure 4.
Le véhicule est positionné à un point précédent Pp dont le point de référence associé est Rp. Il est positionné à l'instant actuel au point Pa et on cherche le point de référence le plus proche Ra
Les points suivants Rs de la trajectoire de référence sont repris dans l'horizon temporel depuis le point actuel Pa.
Les points suivants de la trajectoire de référence sont repris depuis le point actuel de position du véhicule pour former un horizon temporel avec pour origine le point actuel, ledit horizon naturel étant nécessaire pour l'algorithme temps réel.
Le procédé de prédiction des accélérations latérales comprend les étapes suivantes :

- Définition de la position du point et d'indexage 3,

- Détermination du point de référence le plus proche par l'étape de recalage

- Prise en compte du rayon de courbure dudit point de référence le plus proche,

- Estimation de future accélération latérale par intégration 33.

L'estimation de l'accélération transversale pour le pas de temps suivant est faite simplement avec :

- la prédiction de la vitesse longitudinale future Vpred depuis la vitesse longitudinale actuelle Vspd et l'accélération longitudinale AccX actuelle.

[Math 12]

$$Vpred(k)] \ = \ Vpred(k-1) \ + \ [AccX(0)].dTk$$

La distance à parcourir au point M est alors la somme des produits de Vpred(k).dT$_k$ définissant un index de point du parcours de la trajectoire de référence i$_M$ présentant un rayon de courbure R(i$_M$).

L'accélération latérale future estimée est alors :

[Math 13]

$$AccYpred(iM) \ = \ Vpred(iM)^2/R(i_M)$$

La valeur estimée est alors adressée à une étape d'application d'une stratégie de commande prédictive 35 avec l'algorithme temps réel qui fournira des valeurs de commandes à des moyens d'animation de la plateforme mobile comme représenté en figure 3.

Chacun des points de la trajectoire de référence peut présenter d'autres valeurs caractérisantes qui peuvent être les accélérations, vitesses de rotation ou les forces spécifiques en entrée ou à la sortie du modèle vestibulaire, dues à la combinaison d'accélération et à la pesanteur par une inclinaison commandée de la cabine, de ce point le plus proche sont reprises notamment les points suivants selon la trajectoire de référence avec les vitesses desdits points pour former l'horizon temporel nécessaire à la fonction de minimisation des coûts.

Ces caractéristiques peuvent être prises en compte dans la fonction de coûts à minimiser, notamment dans la minimisation des efforts.

Par exemple, lors des essais de simulation de conduite sur un circuit fermé, il arrive souvent de tester les différentes perceptions suite à un changement de paramètre de l'algorithme de restitution de de la perception de mouvement en boucle continue.

On peut également tester différentes manœuvres susceptibles de nécessiter des modifications de paramètres de l'algorithme de la restitution de mouvement. Avec la méthode d'indexation de la distance parcourue, il est facile de paramétrer ces valeurs en fonction de l'indice de la trajectoire parcourue sur le circuit.

Les valeurs de prédiction des accélérations futures selon le parcours du modèle de véhicule virtuel sont injectées dans la fonction de coûts dont l'optimisation par l'algorithme temps réel permet de déduire des commandes des moyens de déplacement de la plateforme de simulation.

L'objectif est atteint : le procédé de prédiction d'accélération latérale selon l'invention permet d'obtenir une table de valeurs d'accélérations latérales de référence de taille réduite et notamment selon une trajectoire de parcours pour optimiser les performances de restitution de mouvement du simulateur.

Comme il va de soi, l'invention ne se limite pas aux seules formes d'exécution de cette prise, décrites ci-dessus à titre d'exemples, elle en embrasse au contraire toutes les variantes notamment par l'utilisation de diverses méthodes mathématiques.

## Revendications

1. Procédé de prédiction d'accélération latérale (100) pour une restitution de mouvement d'un modèle dynamique de véhicule piloté par un conducteur qui se trouve dans un simulateur de conduite automobile (50) comprenant une plateforme de simulation (15) apte à se déplacer dans un espace de travail (14) sensiblement plan et commandée suivant un parcours du véhicule dans un espace virtuel, lesdites commandes étant optimisées par un algorithme temps réel de la restitution de mouvement dont la référence des signaux de futures accélérations latérales est prédéterminée,
caractérisé en ce que la prédetermination (20) des signaux de référence comprend une étape de détermination d'une table de rayons (21) de courbure en des points d'une trajectoire de référence (22) du parcours dans l'espace virtuel du véhicule.

2. Procédé (100) selon la revendication 1, caractérisé en ce l'étape de détermination comporte au moins un roulage du vehicule suivant un parcours dans l'espace virtuel.

3. Procédé (100) selon la revendication 2, caractérisée en ce que la trajectoire de référence (22) comporte des points de référence (24) indexés et espacés entre eux.

4. Procédé (100) selon la revendication 3, caractérisé en ce chaque point de référence (24) comporte une valeur de rayon de courbure.

5. Procédé (100) selon l'une quelconque des revendications 1 à 4, **caractérisé en ce qu'**un parcours selon le procédé se réfère à la trajectoire de référence de parcours

6. Procédé (100) selon la revendication 5, **caractérisé en ce que** le procédé comporte une étape de recalage (32) vers la trajectoire de référence.

7. Procédé (100) selon la revendication 6, caractérisé en ce l'étape de recalage (32) détermine le point de référence de la trajectoire de référence (24) le plus proche de la position du véhicule.

8. Procédé (100) selon la revendication 7, **caractérisé en ce que** le point de référence (24) le plus proche est situé dans une zone limitée par un seuil de distance autour de la position du véhicule à un instant donné.

9. Procédé (100) selon la revendication 8, **caractérisé en ce que** les points qui suivent le point de référence (24) le plus proche sont repris dans un horizon temporel à partir de la position du véhicule pour l'optimisation par l'algorithme temps réel.

10. Procédé (100) selon la revendication 9, **caractérisé en ce que** chaque point de référence comporte des paramètres de parcours selon la trajectoire de référence.

11. Procédé (100) selon la revendication 10, **caractérisé en ce que** les paramètres de parcours sont repris dans l'optimisation des commandes par l'algorithme temps réel.

[FIg.1]

[Fig.2]

[Fig.3]

[Fig.4]

Europäisches
Patentamt

European
Patent Office

Office européen
des brevets

## RAPPORT DE RECHERCHE EUROPEENNE

Numéro de la demande

EP 20 21 2387

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ZHOU FANG ET AL: "Explicit MPC motion cueing algorithm for real-time driving simulator", POWER ELECTRONICS AND MOTION CONTROL CONFERENCE (IPEMC), 2012 7TH INTERNATIONAL, IEEE, 2 juin 2012 (2012-06-02), pages 874-878, XP032215827, DOI: 10.1109/IPEMC.2012.6258965 ISBN: 978-1-4577-2085-7 * page 874 - page 878 * ----- | 1-11 | INV. G09B9/02 G09B9/05 ADD. G09B9/12 |
| X | Zhou Fang ET AL: "REVIEW AND PROSPECTS OF RENAULT'S MPC BASED MOTION CUEING ALGORITHM FOR DRIVING SIMULATOR", Driving Simulation Conference 2014, 5 septembre 2014 (2014-09-05), pages 1-9, XP055734026, Extrait de l'Internet: URL:http://dsc2015.tuebingen.mpg.de/Docs/DSC_Proceedings/2014/DSC14_18_Fang_2.pdf [extrait le 2020-09-25] * page 23.1 - page 23.9 * ----- | 1-11 | |
| X | M. BRUSCHETTA ET AL: "A fast implementation of MPC-based motion cueing algorithms for mid-size road vehicle motion simulators", VEHICLE SYSTEM DYNAMICS: INTERNATIONAL JOURNAL OF VEHICLE MECHANICS AND MOBILITY, vol. 55, no. 6, 2 février 2017 (2017-02-02), pages 802-826, XP055734039, GB ISSN: 0042-3114, DOI: 10.1080/00423114.2017.1280173 * page 801 - page 825 * ----- -/-- | 1-11 | |

**DOMAINES TECHNIQUES RECHERCHES (IPC)**

G09B

Le présent rapport a été établi pour toutes les revendications

| Lieu de la recherche | Date d'achèvement de la recherche | Examinateur |
|---|---|---|
| Munich | 14 décembre 2020 | Giemsa, Falk |

EPO FORM 1503 03.82 (P04C02)

**Europäisches Patentamt**
**European Patent Office**
**Office européen des brevets**

## RAPPORT DE RECHERCHE EUROPEENNE

Numéro de la demande

EP 20 21 2387

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SARMAD MUNIR ET AL: "Complexity reduction in motion cueing algorithm for the ULTIMATE driving simulator", IFAC-PAPERSONLINE, vol. 50, no. 1, 2 février 2017 (2017-02-02), pages 10729-10734, XP055734043, DE ISSN: 2405-8963, DOI: 10.1016/j.ifacol.2017.08.2256 * page 10729 - page 10734 * ----- | 1-11 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 14 décembre 2020 | Giemsa, Falk |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

page 2 de 2

**RÉFÉRENCES CITÉES DANS LA DESCRIPTION**

**Documents brevets cités dans la description**

- FR 2677155 A1
- EP 2166526 A2
- EP 2412496 A1